# EUROPEAN PATENT APPLICATION

(11) **EP 4 693 246 A1**
(43) Date of publication of application: **11.02.2026**
(21) Application number: 24891809.6
(22) Date of filing: 15.11.2024
(51) Int. Cl.: G08B 13/12, G08B 21/18, G01H 15/00, E04H 17/14, E04H 17/02

(54) **APPARATUS FOR DETECTING TRESPASSING**

(30) Priority: 15.11.2023 KR 20230158125
(71) Applicant: Skd Hi-Tec Co., Ltd., Gwangyang-si, Jeollanam-do 57714 (KR); Ji In Protech Co., Ltd., Gwangyang-si, Jeollanam-do 57705 (KR)
(72) Inventor: HAN, Sung Moo, Gwangyang-si, Jeollanam-do 57701 (KR); LEE, Oh Ja, Gwangyang-si, Jeollanam-do 57701 (KR); HAN, Bum Jin, Yeosu-si, Jeollanam-do 59619 (KR); HAN, Ga Ryeo, Gwangyang-si, Jeollanam-do 57701 (KR)
(74) Representative: Mammel und Maser Patentanwälte PartG mbB
(86) International application number: PCT/KR2024/018093
(87) International publication number: WO 2025/105863

(57) **Abstract**

The purpose of the present invention is to provide an apparatus for detecting trespassing, the apparatus including: a plurality of main bodies (110) installed at selected positions in a sensing area; a plurality of barrier ropes (120) for blocking trespassing, which connect the main bodies (110) to one another in the horizontal direction and are arranged to be spaced apart at predetermined intervals in the vertical direction; and a detection unit (130) that pulls the plurality of barrier ropes (120) in a specified direction to keep same in tension and can detect changes caused by shaking or cutting of the barrier ropes (120) during a trespassing process. The present invention keeps the ropes in tension by pulling the ropes in the specified direction with weak tension, and thus immediately detects and senses a shaking or cutting state of the ropes occurring during a trespassing process, resulting in the effect of enabling rapid follow-up actions.

## Description

### [Technical Field]

The present disclosure relates to a trespassing detection apparatus, and more particularly, to a trespassing detection apparatus configured to be installed at a designated location or position such as a wire fence to detect trespassing.

### [Background Art]

In general, a wire mesh (fence) for preventing unauthorized human trespassing from outside or a camera for capturing trespassing is installed at ceasefire lines, security facilities, and industrial sites such as steel mills, power plants, chemical plants, and tunnels.

However, such a configuration has a problem in that it is difficult to respond immediately to cutting or deformation of the wire mesh, and thus it is not possible to perform the essential function of detecting trespassing. In addition, in industrial sites having large-scale equipment or in critical security facilities, a plurality of cameras, thermal detection sensors, and the like need to be installed in a fence-like structure in order to detect (monitor) trespassing from outside. However, such a configuration increases economic costs in consideration of work efficiency. In particular, there are problems such as frequent failure of numerous detection devices, increased maintenance costs, and degradation of functionality caused by malfunction.

Meanwhile, when a separate detection device is installed, interference with existing facilities occurs, and such a configuration is not capable of being applied to industrial sites having limited space. In the case of fence monitoring, there are problems in that detection is not stably performed at night or due to environmental conditions such as heavy rain or interference with natural obstacles such as tress.

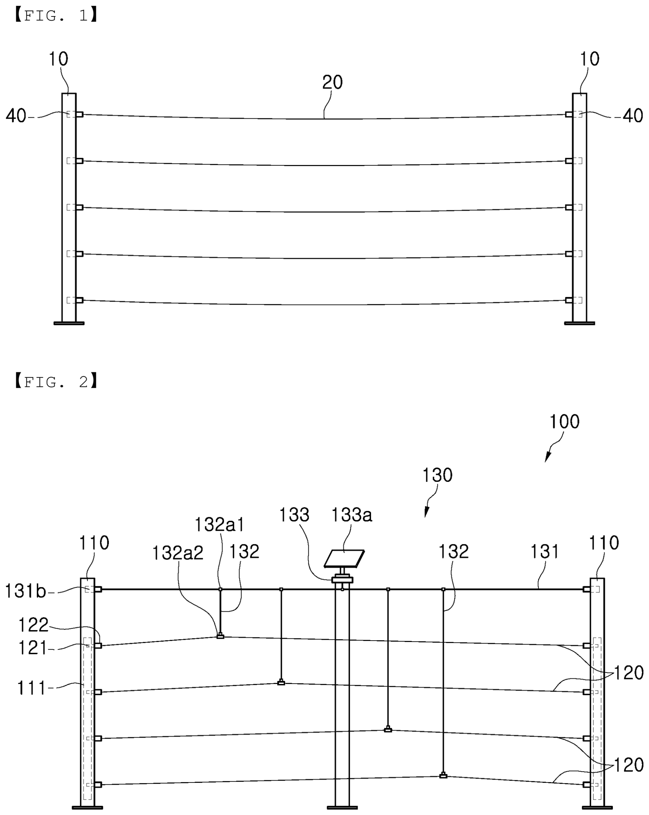

FIG. 1 is a front view showing the configuration of a trespassing detection apparatus according to the related art. Referring to FIG. 1, the trespassing detection apparatus according to the related art includes a plurality of posts 10, a plurality of ropes (barrier ropes) 20, and a plurality of sensors 40. In this case, the ropes 20 are connected to the posts 10. The ropes 20 are disposed so as to block a section between the posts 10, thereby preventing trespassing, and the sensors 40 are connected to the ropes 20 to sense trespassing.

In the trespassing detection apparatus according to the related art, the ropes 20 may be deformed (for example, sagging) due to temperature variation or gravity, and the spacing between the ropes 20 may be greatly changed by such deformation. In addition, in the trespassing detection apparatus according to the related art, the ropes 20 are more easily deformed as the distance between the posts 10 increases. Therefore, when the installation section is long, there is a difficulty in that the long installation section needs to be divided into short unit sections, or strong tension needs to be applied to the ropes 20 in order to maintain the ropes 20 in a straight line form. In this case, applying strong tension to the ropes 20 may cause problems such as deformation (for example, bending) of the posts 10 or increase in the size of means for applying the tension.

Meanwhile, in the trespassing detection apparatus according to the related art, even when the installation section is short, the sensors 40 need to be connected to both end portions of each of the ropes 20, resulting in a large number of sensors 40 being required. The risk of failure is increased in proportion to the number of sensors 40, and considerable maintenance is required.

Related patent documents include Korean Patent Laid-Open Publication No. 10-2009-0097258 (Sep. 16, 2009), Korean Patent Registration No. 10-1420596 (Jul. 21, 2014), Korean Patent Registration No. 10-1575843 (Dec. 22, 2015), Korean Patent Registration No. 10-1606203 (Mar. 25, 2016), and Korean Patent Laid-Open Publication No. 10-2023-0049457 (Apr. 13, 2023).

### [Disclosure]

### [Technical Problem]

An aspect of the present disclosure is to provide a trespassing detection apparatus capable of maintaining ropes (barrier ropes) in a tensioned state by pulling the ropes in a designated direction so that weak tension is applied to the ropes, thereby immediately detecting a change in the position or cutting of the ropes occurring during trespassing.

Another aspect of the present disclosure is to provide a trespassing detection apparatus capable of detecting a change in the position or cutting of a plurality of ropes connected with weak tension, using a minimal number of detection units, over a long section without applying strong tension.

The aspects of the present disclosure are not limited to those mentioned above, and other aspects not mentioned herein will be clearly understood by those skilled in the art from the following description.

### [Technical Solution]

According to an embodiment of the present disclosure, there may be provided a trespassing detection apparatus 100 including a plurality of main bodies 110 installed at selected positions within a detection area, a plurality of barrier ropes 120 configured to prevent trespassing, the plurality of barrier ropes 120 being arranged at predetermined intervals so as to be spaced apart from each other in a vertical direction and to connect the main bodies 110 to each other in a horizontal direction, and a detection unit 130 configured to pull the plurality of barrier ropes 120 in a designated direction so as to maintain the plurality of barrier ropes 120 in a tensioned state and to detect an amount of change occurring due to shaking or cutting of the barrier ropes 120 during trespassing.

The detection unit 130 may include a detection rope 131 configured to connect upper portions of the main bodies 110 to each other in the horizontal direction, a connection member 132 configured to connect the barrier ropes 120 to the detection rope 131 so as to pull the barrier ropes 120 in the designated direction and maintain the barrier ropes 120 in a tensioned state, and a detector 133 configured to detect shaking or an amount of change in position of the detection rope 131 occurring due to shaking or cutting of the barrier ropes 120 so as to determine whether trespassing has occurred.

The connection member 132 may be integrally formed such that one end thereof is connected to an upper one of the barrier ropes 120, an intermediate portion thereof is wound around a rotation member 131a rotatably provided on the detection rope 131, and the other end thereof is connected to a lower one of the barrier ropes 120.

The detector 133 may include a controller configured to store a normal state without shaking of the barrier ropes 120 as a reference data value, to compare the reference data value with a data value obtained from shaking or a change in position of the detection rope 131 occurring due to trespassing or cutting of the barrier ropes 120, and to determine that trespassing has occurred when a result of comparison is outside an allowable error range.

The technical solution will be made more specific and clear through the embodiments and the drawings to be described below. In addition, various technical solutions other than the technical solution mentioned above may be additionally provided below.

### [Advantageous Effects]

The present disclosure has an effect in that, even when barrier ropes are pulled in a designated direction and maintained in a tensioned state with weak tension, shaking or cutting of the barrier ropes occurring during trespassing is immediately detected and sensed, thereby allowing prompt follow-up actions to be carried out.

The present disclosure has an effect in that shaking or cutting of the barrier ropes installed over a long section is detected using a minimal number of detection units, thereby resolving the inconvenience of maintenance caused by installing complex equipment and a large number of sensors as in the related art, and reducing economic costs.

The present disclosure has an effect of preventing deformation caused by strong tension in the barrier ropes installed over a long section, thereby improving durability and service life.

The effects of the present disclosure are not limited to those mentioned above, and other effects not mentioned herein will be clearly understood by those skilled in the art from this specification and the accompanying drawings.

### [Description of Drawings]

FIG. 1 is a front view showing the configuration of a trespassing detection apparatus according to the related art.
FIGs. 2 and 3 are front views showing the configuration and operation of an embodiment of a trespassing detection apparatus according to the present disclosure.
FIGs. 4 to 7 are views showing the configurations of various other embodiments of the trespassing detection apparatus according to the present disclosure, wherein FIGs. 4 to 6 are front views showing the other embodiments, and FIG. 7 is a side view showing one of the other embodiments.

### [Description of Reference Numerals]

100: trespassing detection apparatus 110: main body
111: guide 120: barrier rope
121: movable body 122: tension adjuster
130: detection unit 131: detection rope
131a: rotation member 131b: mounting element
132: connection member 132al, 132a2: moving member
132b: length adjustment element 133: detector
133a: solar panel A: wall

### [Best Mode]

Hereinafter, embodiments of the present disclosure will be described in detail with reference to the accompanying drawings so that those skilled in the art can easily carry out the embodiments. The present disclosure may, however, be embodied in many different forms, and should not be construed as being limited to the embodiments set forth herein.

In the following description of the embodiments of the present disclosure, a detailed description of known functions and configurations incorporated herein will be omitted when the same may make the subject matter of the present disclosure rather unclear. Wherever possible, the same reference numerals will be used throughout the drawings to refer to the same or like parts.

At least some of the terms used in this specification are terms defined taking into consideration the functions obtained in accordance with the present disclosure, and may be changed in accordance with the option of a user or operator or a usual practice. Therefore, the definitions of these terms should be determined based on the whole content of this specification. In addition, throughout the specification, when a constituent element is referred to as "comprising," "including," or "having" another constituent element, the constituent element should not be understood as excluding other elements, so long as there is no special conflicting description, and the constituent element may include at least one other element. In addition, when a part is said to be "connected" (or "coupled") to another part, the part and the other part may be "directly connected" (or "directly coupled") to each other, or may be "indirectly connected" (or "indirectly coupled") to each other with one or more intervening parts interposed therebetween.

In the drawings, the sizes or shapes of constituent elements and the thicknesses of lines may be exaggerated for convenience of description.

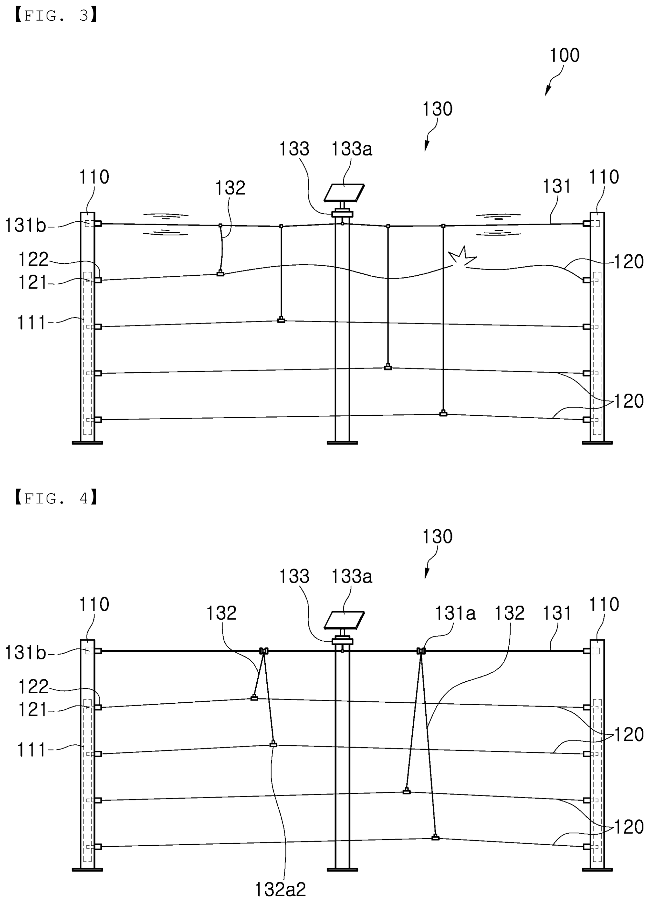

Embodiments of a trespassing detection apparatus according to the present disclosure are shown in FIGs. 2 to 7. FIGs. 2 and 3 show the configuration and operation of a trespassing detection apparatus according to an embodiment of the present disclosure. FIGs. 4 to 7 show the configurations of trespassing detection apparatuses according to various other embodiments of the present disclosure, respectively. The trespassing detection apparatuses according to the embodiments of the present disclosure may prevent and detect trespassing.

Referring to FIG. 2, a trespassing detection apparatus 100 according to an embodiment of the present disclosure includes a plurality of main bodies 110, which are disposed at predetermined intervals so as to be spaced apart from each other in a horizontal direction within a detection area (installation section in which the trespassing detection apparatus is installed to prevent and detect trespassing), a plurality of barrier ropes 120, which are arranged between the main bodies 110 to connect the main bodies 110 to each other in the horizontal direction and to block the space between the main bodies 110, thereby preventing trespassing, and a detection unit 130, which maintains the barrier ropes 120 in a tensioned state, detects a change in the tensioned barrier ropes 120, and determines whether trespassing has occurred based on the detected change.

The main bodies 110 are provided at respective selected positions (preset positions) within the detection area. The arrangement positions of the main bodies 110 may be determined according to the length or area of the detection area. For example, the main bodies 110 may be implemented as posts. In addition, the posts may be vertically installed on the ground of the detection area.

Depending on implementation conditions, the trespassing detection apparatus 100 (hereinafter, reference numeral "100" will be omitted) according to an embodiment of the present disclosure may be installed in front of or behind an existing wire fence or wire mesh in the longitudinal direction of the wire fence or the wire mesh, thereby doubly preventing or detecting trespassing together with the wire fence or the wire mesh.

The barrier ropes 120 are arranged at predetermined intervals so as to be spaced apart from each other in a vertical direction (upward-downward direction), thereby blocking the space between the main bodies 110. The main bodies 110, which are connected to each other by the barrier ropes 120, are provided therein with guides 111, respectively, which are elongated in the vertical direction. Both end portions of each of the barrier ropes 120 are connected to movable bodies 121, each of which is movable in the vertical direction along a respective one of the two opposite guides 111. The guides 111 and the movable bodies 121 allow the barrier ropes 120 to move in the vertical direction, so that the vertical position of each of the barrier ropes 120 and the vertical interval between the barrier ropes 120 are adjusted to conditions required to prevent trespassing.

The guides 111 may be implemented as guide rails or the like. Each of the movable bodies 121 may include a movable element, which is moved along the guide 111 under the guidance thereof, and a position fixing element, which fixes and releases the position of the movable element with respect to the guide 111. The movable element may include a bearing, a roller, a wheel, or the like. The position fixing element may include a bolt, a clamp, or the like. The movable element is moved along the guide 111 to a required position (designated position), and then the position of the movable element is fixed by the position fixing element, so that the vertical position of each of the barrier ropes 120 and the vertical interval between the barrier ropes 120 may be fixed in a required state.

The barrier ropes 120 may be provided to have characteristics (such as length and material) required in accordance with the length, area, or other parameters of the detection area. Both end portions of each of the barrier ropes 120 are connected to tension adjusters 122, which maintain or adjust the tension of the barrier ropes 120 at a required level. Each of the tension adjusters 122 is provided between a corresponding one of the barrier ropes 120 and a corresponding one of the movable bodies 121. Each of the movable bodies 121 is connected to a corresponding one of the tension adjusters 122. Accordingly, the movable bodies 121 are connected to both end portions of each of the barrier ropes 120 via the respective tension adjusters 122.

The tension adjusters 122 may be configured to manually or automatically maintain or adjust the tension of the barrier ropes 120 using a turnbuckle, a spring, or the like.

The detection unit 130 maintains the barrier ropes 120 in a tensioned state, thereby immediately detecting a change (such as cutting, shaking, or bending) that may occur in the barrier ropes 120 during trespassing. In the related art, because both sides of a rope (barrier rope) need to be pulled in the longitudinal direction so that the rope is maintained in a strongly tensioned state, a large load and deformation occur depending on the length of the rope. In contrast, in the trespassing detection apparatus according to an embodiment of the present disclosure, even when the barrier ropes 120 are maintained in a weakly tensioned state, the detection unit 130 pulls the barrier ropes 120 in a designated direction to maintain the barrier ropes 120 in a tightly tensioned state, thereby immediately detecting a change occurring in the barrier ropes 120 during trespassing.

The detection unit 130 includes a detection rope 131, which is disposed above the uppermost one of the barrier ropes 120 and connects the main bodies 110 to each other in the horizontal direction, at least one connection member 132, which pulls the barrier ropes 120 in a designated direction (preset direction) with respect to the detection rope 131 to maintain the barrier ropes 120 in a tensioned state, and a detector 133, which detects an amount of change in the detection ropes 131 according to a change in the state of the barrier ropes 120 and determines whether trespassing has occurred based on the detected amount of change.

The detection rope 131 may be formed of a flexible material. The detection rope 131 may be connected to upper end portions of the main bodies 110. Both end portions of the detection rope 131 may be easily detachably mounted to the opposing inner sides of the main bodies 110 connected to each other by the detection rope 131. Both end portions of the detection rope 131 are mounted to the main bodies 110 via mounting elements 131b.

Each of the mounting elements 131b is provided between a corresponding one of the main bodies 110 and the detection rope 131. The mounting elements 131b may be configured to allow the detection rope 131 to be detachably coupled to the main bodies 110 through a coupling method such as bolt coupling or flange coupling. In addition, the mounting elements 131b may be configured to manually or automatically maintain or adjust the tension of the detection rope 131 using a turnbuckle, a spring, or the like.

The connection member 132 connects the detection rope 131 to the barrier ropes 120 so as to pull the barrier ropes 120 upward with respect to the detection rope 131 using the predetermined length thereof, thereby maintaining the barrier ropes 120 in a tensioned state and supporting the barrier ropes 120 so that sagging of the barrier ropes 120 is prevented and the vertical interval between the barrier ropes 120 is prevented from being excessively increased by external force.

The connection member 132 is provided in plural. The number of connection members 132 is equal to the number of barrier ropes 120. Upper end portions of all the connection members 132 are connected to the detection rope 131, and lower end portions thereof are connected to respective barrier ropes 120. The connection members 132 may be disposed at intervals so as to be spaced apart from each other in the longitudinal direction of the barrier ropes 120.

The number of connection members 132 may exceed the number of barrier ropes 120. In this case, at least some of the barrier ropes 120 are connected to a plurality of connection members 132 and are thus maintained in a tensioned state by the plurality of connection members 132. For example, the connection members 132 may be implemented as a linear member such as a rod or a wire.

Each of the connection members 132 is connected to the detection rope 131 via a first moving member 132a1 and is connected to a corresponding one of the barrier ropes 120 via a second moving member 132a2. The first moving member 132a1 is provided to be movable along the detection rope 131, and the second moving member 132a2 is provided to be movable along a corresponding one of the barrier ropes 120. The first moving member 132a1 and the second moving member 132a2 allow the connection members 132 to be easily moved, so that the arrangement position of each of the connection members 132 and the arrangement interval between the connection members 132 are adjusted.

Each of the connection members 132 is connected at an upper end portion thereof to the first moving member 132a1 and is connected at a lower end portion thereof to the second moving member 132a2. The first moving member 132a1 may be configured to move along the detection rope 131 using a roller, a tube, or the like. In addition, the first moving member 132a1 may have a configuration in which the position thereof is fixed or released with respect to the detection rope 131 using a bolt, a clamp, or the like. The second moving member 132a2 may be configured to move along a corresponding one of the barrier ropes 120 using a roller, a tube, or the like. In addition, the second moving member 132a2 may have a configuration in which the position thereof is fixed or released with respect to a corresponding one of the barrier ropes 120 using a bolt, a clamp, or the like.

The detector 133 detects (senses) restoring force of the detection rope 131 generated as the barrier ropes 120 are changed during trespassing. The detector 133 may include a sensor having characteristics capable of immediately and accurately sensing the amount of change (displacement) in the detection rope 131 according to restoring action of the detection rope 131 caused by the barrier ropes 120.

The detector 133 may include a charger so as to receive power from the charger, may receive commercial power from an external source, or may receive power using a solar panel 133a and a self-power generation function.

The amount of change detected by the detector 133 is transmitted in real time to an operation room (control room) so as to enable detection of the occurrence of trespassing. The detector 133 stores a normal state without a change in the barrier ropes 120 as a reference data value, sets the amount of change detected by the detector 133 as a detection data value, and compares the detection data value with the reference data value, thereby determining whether trespassing has occurred. To this end, the detector 133 may include a controller.

As a result of comparing the detection data value with the reference data value, if the detection data value is outside an allowable error range, the detector 133 may determine that trespassing has occurred. In order to achieve such a comparison operation, the controller may include a central processing module.

In order to improve the accuracy of determination as to whether trespassing has occurred, the controller of the detector 133 may set an allowable error range so that the amount of change detected due to slight vibrations or wind acting on the barrier ropes 120, rather than due to trespassing of a person or the like, is ignored.

In addition, the detector 133 may include a warning module. Upon determining that trespassing has occurred, the detector 133 activates the warning module to issue a warning indicating the occurrence of trespassing visually (light) and/or audibly (warning sound).

Referring to FIG. 3, in the trespassing detection apparatus according to an embodiment of the present disclosure, when the barrier ropes 120, which are maintained in a tensioned state by the connection members 132, are changed, for example, cut or shaken, due to the occurrence of trespassing, the detection rope 131 is changed, for example, shaken, in reaction to the change in the barrier ropes 120, and the detector 133 detects trespassing through detection of the amount of change in the detection rope 131. Accordingly, follow-up actions against trespassing may be promptly carried out.

Various other embodiments of the trespassing detection apparatus according to the present disclosure will now be described with reference to FIGs. 4 to 7.

The embodiment shown in FIG. 4 is different from the embodiment shown in FIG. 2 in that the connection members 132 connecting the detection rope 131 to the barrier ropes 120 are differently configured. In the embodiment shown in FIG. 4, each of the connection members 132 has an intermediate portion connected to the detection rope 131 via a rotation member 131a and both end portions respectively connected to different barrier ropes 120. The rotation member 131a is rotatably provided on the detection rope 131. The rotation member 131a may be implemented as a roller, a pulley, or the like that is rotatable about the detection rope 131. Each of the connection members 132 may be connected at both end portions thereof to the barrier ropes 120 via the second moving members 132a2 described above in a state in which the intermediate portion thereof is caught by the rotation member 131a.

In the embodiment shown in FIG. 4, each of the connection members 132 connects the detection rope 131 to two selected barrier ropes 120. Accordingly, when there is a change in any one of the two selected barrier ropes 120, the change is transmitted to the detection rope 131, thereby causing the detection rope 131 to react in response to the change.

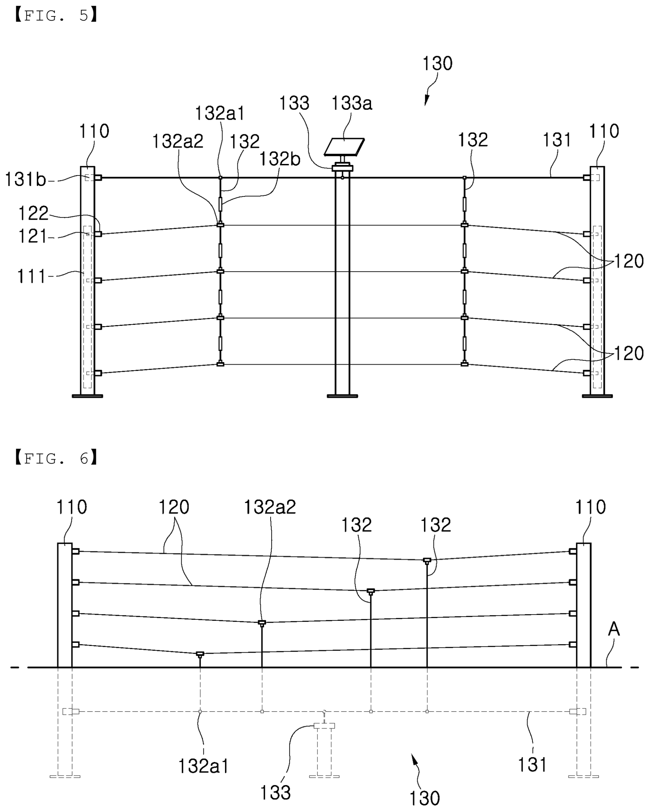

Compared with the embodiment shown in FIG. 2 or the embodiment shown in FIG. 4, the embodiment shown in FIG. 5 is differently configured in that the connection members 132 are provided with length adjustment elements 132b. Each of the connection members 132 in the embodiment shown in FIG. 5 may be adjusted in length by the length adjustment elements 132b. The connection members 132 in the embodiment shown in FIG. 5 may be configured to be adjustable in length using a turnbuckle, a bolt-nut combination, a spring, or the like.

Compared with the other embodiments, the embodiment shown in FIG. 6 is differently configured in the position at which the detection rope 131 of the detection unit 130 is disposed. In the embodiment shown in FIG. 6, the detection rope 131 may be disposed below the lowermost one of the barrier ropes 120 and may connect the main bodies 110 to each other in the horizontal direction. In addition, the connection members 132 may connect the detection rope 131 to the barrier ropes 120 so as to pull the barrier ropes 120 downward with respect to the detection rope 131. The embodiment shown in FIG. 6 may be used in a case in which an obstacle such as a wall A is present.

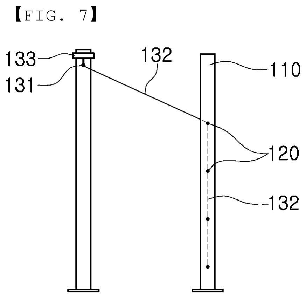

Compared with the other embodiments, the embodiment shown in FIG. 7 is differently configured in the position at which the detection rope 131 of the detection unit 130 is disposed. In the embodiment shown in FIG. 7, the detection rope 131 may be installed in front of or behind the barrier ropes 120, and the connection members 132 may connect the detection rope 131, which is disposed in front of or behind the barrier ropes 120, to the barrier ropes 120. The embodiment shown in FIG. 7 may be used in a case in which the detection rope 131 and/or the connection members 132 interfere with other structures (such as a wire fence or a wire mesh) when the detection unit 130 is disposed above or below the barrier ropes 120.

While the present disclosure has been described above, the present disclosure is not limited to the disclosed embodiments and the accompanying drawings, and those skilled in the art may variously modify the present disclosure without departing from the technical spirit of the present disclosure. In addition, the technical features described in the embodiments of the present disclosure may be independently carried out, or two or more technical features may be combined.

## Claims

1. A trespassing detection apparatus comprising:
a plurality of main bodies installed at selected positions within a detection area;
a plurality of barrier ropes configured to prevent trespassing, the plurality of barrier ropes being arranged at predetermined intervals so as to be spaced apart from each other in a vertical direction and to connect the plurality of main bodies to each other in a horizontal direction; and
a detection unit configured to pull the plurality of barrier ropes in a designated direction so as to maintain the plurality of barrier ropes in a tensioned state and to detect an amount of change occurring due to shaking or cutting of the plurality of barrier ropes during trespassing.

2. The trespassing detection apparatus according to claim 1, wherein the detection unit comprises:
a detection rope configured to connect upper portions of the plurality of main bodies to each other in the horizontal direction;
a connection member configured to connect the plurality of barrier ropes to the detection rope so as to pull the plurality of barrier ropes in the designated direction and maintain the plurality of barrier ropes in a tensioned state; and
a detector configured to detect shaking or an amount of change in position of the detection rope occurring due to shaking or cutting of the plurality of barrier ropes so as to determine whether trespassing has occurred.

3. The trespassing detection apparatus according to claim 2, wherein the connection member is integrally formed such that the connection member comprises an end connected to an upper one of the barrier ropes, an intermediate portion wound around a rotation member rotatably provided on the detection rope, and another end connected to a lower one of the barrier ropes.

4. The trespassing detection apparatus according to claim 2, wherein the detector comprises a controller configured to store a normal state without shaking of the plurality of barrier ropes as a reference data value, to compare the reference data value with a data value obtained from shaking or a change in position of the detection rope occurring due to trespassing or cutting of the plurality of barrier ropes, and to determine that trespassing has occurred when a result of comparison is outside an allowable error range.
